# EUROPEAN PATENT APPLICATION

(11) **EP 4 464 553 A1**
(43) Date of publication of application: **20.11.2024**
(21) Application number: 23173533.3
(22) Date of filing: 16.05.2023
(51) Int. Cl.: B60N 2/90

(54) **INFLATABLE BLADDER SYSTEM WITH IMPROVED VALVE SYSTEM**

(71) Applicant: Schukra Berndorf GmbH, 2560 Berndorf (AT)
(72) Inventor: SAMAIN, Maxime, 8530 Harelbeke (BE); KALMUTZKI, Martin, 91174 Spalt (DE)
(74) Representative: Kraus & Lederer PartGmbB

(57) **Abstract**

The present invention relates to a bladder system (1000) comprising a pump (1100) comprising a pump inlet port (1110) and a pump outlet port (1120), and a valve system (1200). In particular, the valve system (1200) is configured such that the pump (1100) can be used to
- deflate one or more first bladder (1310/1 - 1310/N), each one being configured such that, when in fluid communication with the environment, the one or more first bladder (1310/1 - 1310/N) has an inflated rest state.
- inflate one or more second bladder (1320/1 - 1320/N), each one being configured such that, when in fluid communication with the environment, the one or more second bladder (1310/1 - 1310/N) has a deflated rest state.

## Description

The present invention relates to an inflatable bladder system, comprising at least two different types of bladders, and a valve system which enables the two different types of bladders to be operated with a single pump.

### State of the art

Seats are known to incorporate one or more inflatable bladder for increased comfort. In particular, the bladders can be inflated or deflated depending on the body shaper and/or support preferences of the user of the seat.

Commonly known bladders used for this purpose comprise one or more pouches which are filled with a fluid, generally air, increasing their volume as more air is pumped in. In the absence of control of the fluid, the pouches are substantially empty, or at the minimum of their possible volume.

More recently, the inverse approach has appeared on the market, where pouches are filled with foam so that, in the absence of control of the fluid, the pouches are substantially full, or at the maximum of their possible volume. By removing air from the pouches, they can become smaller.

Those two systems can be advantageously combined, in some applications. In order to do so, however, two pumps have to be provided, one for compression of air into the bladders which are to be inflated, and one for suction of air from the bladders which are to be deflated.

This increases costs, volume, weight and complexity of the seats.

### Summary of the invention

The inventors have realized that the necessity of two pumps can be avoided with an appropriate valve system.

This is solved by the invention, which is defined by independent claim 1. The dependent claims define further advantageous features of some optional aspects of the invention.

### Brief description of the drawings

Figure 1 schematically illustrates a bladder system 1000,
Figure 2 schematically illustrates a bladder system 2000 comprising a possible implementation for the valve system 1200 in the form of valve system 2200,
Figure 3 schematically illustrates a bladder system 3000 comprising a possible implementation for the valve system 1200 in the form of valve system 3200,
Figure 4 schematically illustrates a bladder system 4000 comprising a possible implementation for the valve system 1200 in the form of valve system 4200.

### Detailed description

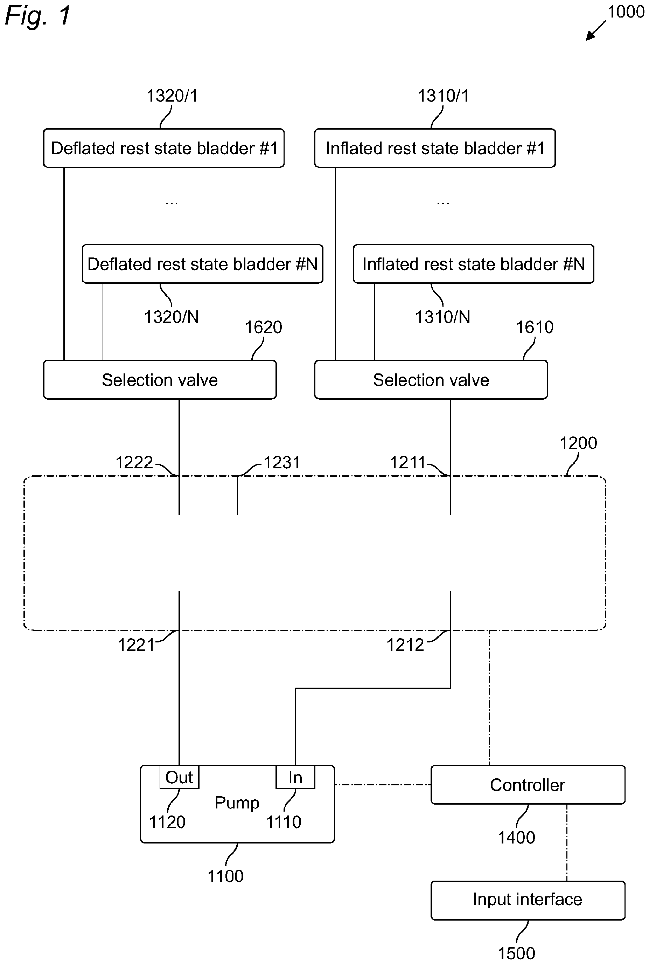

Figure 1 schematically illustrates a bladder system 1000 comprising a pump 1100 and a valve system 1200. Each of the remaining components of the bladder system 1000 is understood to be optional, and each one of those remaining components can be implemented without the other ones, even though they are illustrated together.

As visible, the pump 1100 comprises a pump inlet port 1110, from which fluid can be sucked in and a pump outlet port 1120, from which fluid can be pumped out. The valve system 1200 comprises a first valve inlet port 1211, a first valve outlet port 1212, a second valve inlet port 1221, a second valve outlet port 1222. The pump inlet port 1110 is connected to the first valve outlet port 1212 and the pump outlet port 1120 is connected to the second valve inlet port 1221.

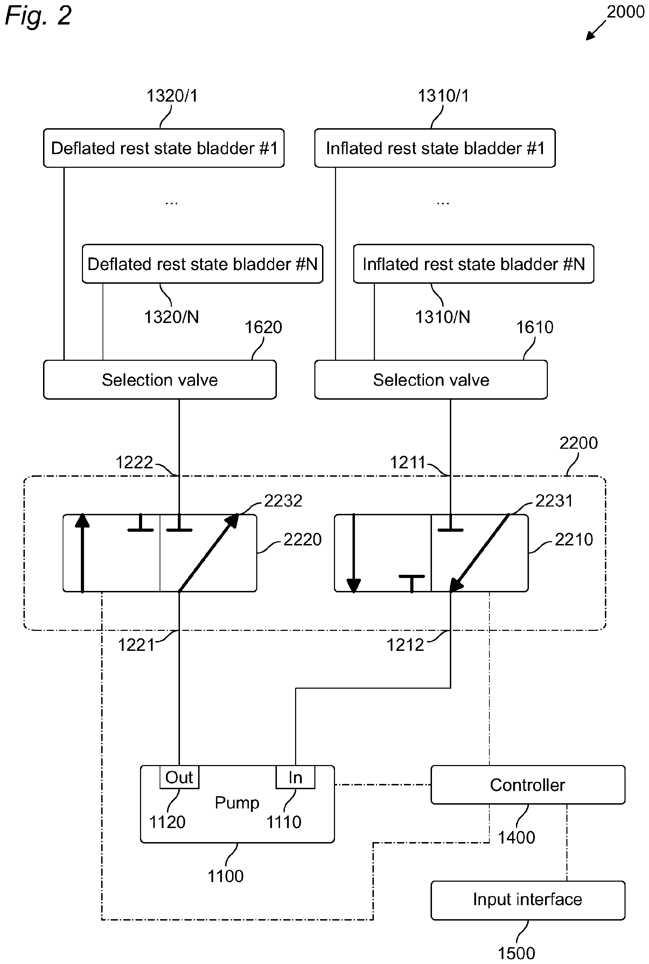

The valve system 1200, which is only schematically illustrated in figure 1 and for which possible, however not limiting, specific implementations are described more in details in figures 2, 3 and 4, is configured such that the pump 1100 can be used to deflate one or more first bladder 1310/1 - 1310/N, and/or inflate one or more second bladder 1320/1 - 1320/N.

In particular, each of the one or more first bladder 1310/1 - 1310/N is configured such that, when in fluid communication with the environment, the one or more first bladder 1310/1 - 1310/N has an inflated rest state. Conversely, each of the one or more second bladder 1320/1 - 1320/N is configured such that, when in fluid communication with the environment, the one or more second bladder 1310/1 - 1310/N has a deflated rest state.

Thanks to this arrangement, the valve system 1200 enables the use of a single pump 1100 for operating the two, different, types of bladders without requesting the presence of a second pump.

Those skilled in the art will realize that such an operation of the valve system 1200 can be implemented in a plurality of manners, by appropriately configuring one or more valves. While examples of possible configurations are provided in figures 2, 3 and 4, it is understood that a very high number of possible valve configurations can achieve the operation above, and that those cannot all be possibly described, so that the invention can be described by the functional definition provided above.

In some embodiments, as also illustrated in figure 1, the valve system 1200 can further comprises a valve exhaust port 1231, which enables one or more of the other ports of the valve to be put in fluid communication with the environment. It will be understood by those skilled in the art that this feature is not strictly necessary. For instance, it could be possible to deflate the one or more first bladder 1310/1 - 1310/N and use the fluid to inflate the one or more second bladder 1320/1 - 1320/N, and vice versa, without a connection to the environment.

In some embodiments, the bladder system 1000 can further comprise a first selection valve 1610 and a second selection valve 1620. The first selection valve 1610 is configured to connect the first valve inlet port 1211 to one or more of the first bladder 1310/1 - 1310/N. Similarly, the second selection valve 1620 is configured to connect the second valve outlet port 1222 to one or more of the second bladder 1320/1 - 1320/N.

In some embodiments, the bladder system 1000 can further comprise one or more first bladder 1310/1 - 1310/N, connected to the first valve inlet port 1211. Preferably, the one or more first bladder 1310/1 - 1310/N is configured such that, when in fluid communication with the environment, the one or more first bladder 1310/1 - 1310/N has an inflated rest state. That is, when the bladder interior is allowed to freely communicate with the environment, it will naturally tend to reach an inflated, or thicker, configuration. This is the case, for instance, if the one or more first bladder 1310/1 - 1310/N comprises resilient material inside the bladder. The resilient material, which can be for instance foam but is not limited thereto, has a tendency to expand to a rest state, in the absence of other forces. When doing so, since the resilient material is placed inside of the bladder, it can bring the bladder to a thicker configuration than otherwise reachable when, for instance, air is pumped out of the bladder, resulting in a compression of the resilient material.

As visible in figure 1, in some embodiments the bladder system 1000 can also comprise one or more second bladder 1320/1 - 1320/N, connected to the second valve outlet port 1222. In contrast to the one or more first bladder 1310/1 - 1310/N, the one or more second bladder 1320/1 - 1320/N can configured such that, when in fluid communication with the environment, the one or more second bladder 1310/1 - 1310/N has a deflated rest state. This can be the case, for instance, for bladders which are empty inside and are made of soft material. Those bladders can have a thicker, or inflated, configuration when a fluid, such as air, is pumped into them. When this fluid is allowed to escape the bladder, the bladder will naturally return to a rest state in which it has a thinner, or deflated, configuration.

In some optional embodiments, as illustrated in figure 1, the bladder system 1000 can further comprise a controller 1400 configured to control the valve system 1200 and the pump 1100, to execute any of a plurality of states enabling the inflation and/or deflation of the first and second bladders. In some optional embodiments, as illustrated in figure 1, the system can further comprise an input interface 1500 configured to provide the controller 1400 with commands for selecting any of the plurality of states based on a requested operation for the one or more first bladder 1310/1 - 1310/N and a requested operation for the one or more second bladder 1320/1 - 1320/N.

As will be clear to those skilled in the art, the input interface 1500 can be implemented such that it can be directly operated from the user, as it could be the case or, for instance, a switch or a touchscreen, or it can be configured to receive an electronic indication from another component, as it could be the case, for instance, where the user operates a button and this information is electronically transmitted to the interface 1500.

Figure 2 schematically illustrates a bladder system 2000 comprising a possible implementation for the valve system 1200 in the form of valve system 2200.

In figure 2 and the subsequent drawings, the valve system is schematically represented. It will be understood that the arrows in the valve system are intended to schematically represent a connection of two ports which can allow fluid to flow in both directions along the connection, and not only in the direction illustrated by the arrow.

As can be seen in figure 2, valve system 2200 comprises a first 3/2 valve 2210 comprising a first valve inlet port 1211, a first valve outlet port 1212 and a first valve exhaust port 2231. Valve system 2200 further comprises a second 3/2 valve 2220, similarly comprising a second valve inlet port 1221, a second valve outlet port 1222 and a second valve exhaust port 2232. While the first valve exhaust port 2231 and the second valve exhaust port 2232 are illustrated as separate, the invention is not limited thereto and they could both be implemented by a single valve exhaust port 1231.

Connected to the two valves is pump 1100 comprising a pump inlet port 1110 and a pump outlet port 1120 as previously described. As can be seen in figure 2, the pump inlet port 1110 is connected to the first valve outlet port 1212 and the pump outlet port 1120 is connected to the second valve inlet port 1221.

Thanks to this implementation, the invention can have the pump 1100 pumping air into the second 3/2 valve 2220 and out of the first 3/2 valve 2220. This allows the second 3/2 valve 2220 to be connected to a bladder which is to be inflated, and the first 3/2 valve 2220 to be connected to a bladder which is to be deflated. Moreover, since both the first and second 3/2 valves can be configured independently, those can be used to control inflation and deflation of both bladders independently, as will become clearer from the following description.

In some preferred embodiments, the first 3/2 valve 2210 and/or the second 3/2 valve 2220 is bi-stable. This is particularly advantageous if one or more of the bladders are inflated and deflated often, as it could be the case for instance when the bladders are used in massage mode. In those cases, the valve driving the bladder will spend a significant time in one of the two positions, then in the other one, then back to the previous one, and so on. If the valves are not bi-stable, at least one of those two positions requires powering the valve constantly for this position to be maintained, which can lead to high power consumption and to too much heat being generated at the valve.

In some optional embodiments, as illustrated in figure 2, the system can further comprise a controller 1400 configured to control the valve system (1200, 2200) and the pump 1100, to execute any of a plurality of states S1-S4 defined as

| State | Pump 1100 | first 3/2 valve 2210 configured to connect | second 3/2 valve 2210 configured to connect |
|---|---|---|---|
| S1 | ON | | second valve inlet port 1221 |
| | | first valve inlet port 1211 | second valve outlet port 1222 |
| S2 | | first valve outlet port 1212 | second valve inlet port 1221 |
| | | | second valve exhaust port 2232 |
| S3 | | first valve outlet port 1212 | second valve inlet port 1221 |
| | | | second valve outlet port 1222 |
| | | first valve exhaust port 2231 | second valve inlet port 1221 |
| S4 | OFF | | second valve exhaust port 2232 |

It will be clear to those skilled in the art that not all of states S1-S4 has to be implemented. For instance, in some implementations only states S2 an S4 might be implemented.

In some optional embodiments, as illustrated in figure 2, the system can further comprise an input interface 1500 configured to provide the controller 1400 with commands for selecting any of the plurality of states S1-S4 based on a requested operation for the one or more first bladder 1310/1 - 1310/N and a requested operation for the one or more second bladder 1320/1 - 1320/N,

| requested operation for first bladder 1310/1 - 1310/N | requested operation for second bladder 1320/1 - 1320/N | State |
|---|---|---|
| Deflate | Inflate | S1 |
| | Maintain | S2 |
| Maintain | Inflate | S3 |
| | Maintain | S4 |

In some preferred embodiments, the controller 1400 can further be configured to control the valve system (1200, 2200) and the pump 1100, to execute any of a plurality of states S5-S7 defined as

| | | | |
|---|---|---|---|
| S5 | OFF | first valve inlet port 1211 | second valve inlet port 1221 |
| | | first valve outlet port 1212 | second valve outlet port 1222 |
| S6 | | | second valve inlet port 1221 |
| | | | second valve exhaust port 2232 |
| S7 | | first valve outlet port 1212 | second valve inlet port 1221 |
| | | first valve exhaust port 2231 | second valve outlet port 1222 |

It will be clear to those skilled in the art that not all of states S5-S7 has to be implemented. For instance, in some implementations only states S6 an S7 might be implemented.

in some implementations, the input interface 1500 can be further configured to provide the controller 1400 with commands for selecting any of the plurality of states S5-S7 based on a requested operation for the one or more first bladder 1310/1 - 1310/N and a requested operation for the one or more second bladder 1320/1 - 1320/N,

| | | |
|---|---|---|
| Equalize to second bladder 1320/1 - 1320/N | Equalize to first bladder 1310/1 - 1310/N | S5 |
| Deflate if net positive pressure applied to it/Inflate to rest state if net negative pressure applied to it | Maintain | S6 |
| Maintain | Deflate | S7 |

In state S6, the net positive pressure is to be understood as the pressure which is applied to the walls of the second bladder from the external direction minus the pressure which is applied to the walls of the second bladder from the internal direction. For instance, if the bladder is used in a seat with a person sitting on it, it could be possible for the walls of the bladders to experience more pressure from the weight of the person than from the resilient material inside of the bladder, in which case it could lead the bladder to become deflated. Conversely, if only the resilient material is acting on the walls of the bladder, this would lead to the bladder being inflated.

In preferred implementations of the invention, the pump 1100 is configured so that, then in OFF mode, fluid, such as air, to and/or from the valves can flow through it. This in particular enables the implementations of states S5-S7 as described above, although the invention is not limited thereto. If the pump does not allow fluid to flow through it, in OFF mode, than states S6 and S7 can be configured so that the bladder which is to be deflated is connected directly to the exhaust port, instead of through the pump.

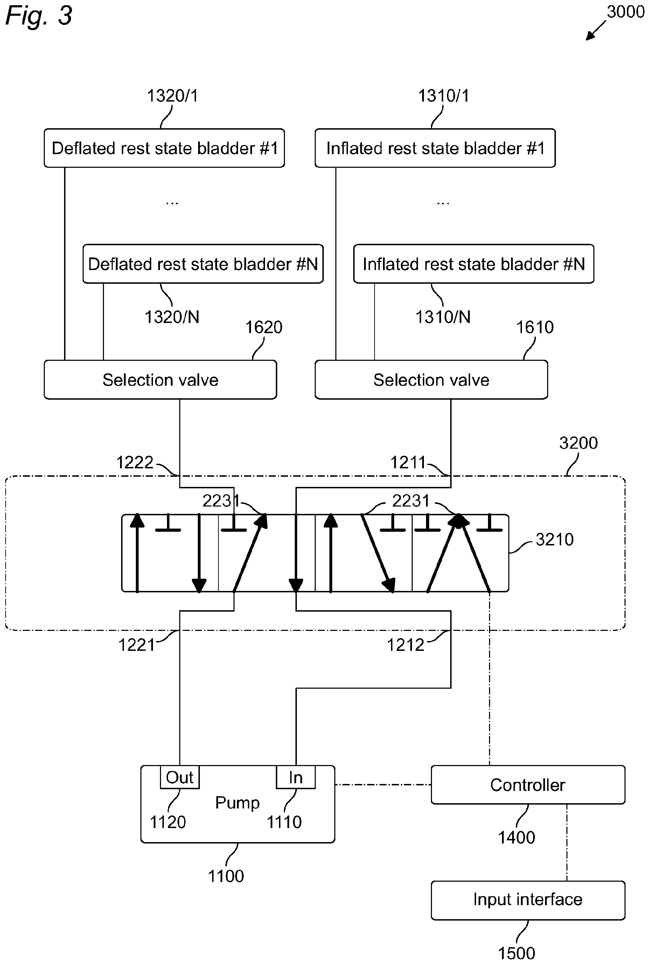

It will be clear to those skilled in the art that, while the embodiment of figure 2 has been described with reference to 3/2 valves, a corresponding functionality can also be achieved with the appropriate combination of other types of valves. Those equivalent implementations can therefore be also considered to provide embodiments of the invention. An example of a possible functional equivalent is shown in figure 3.

Figure 3 schematically illustrates a bladder system 3000 comprising a possible implementation for the valve system 1200 in the form of valve system 3200,

The valve system 3200 employs a 5/4 valve 3210, which, together with the pump operation, can implement the following states:

| State | Pump 1100 | 5/4 valve 3210 configured to connect |
|---|---|---|
| S1 | ON | first valve inlet port 1211 to first valve outlet port 1212 |
| | | second valve inlet port 1221 to second valve outlet port 1222 |
| S2 | ON | first valve inlet port 1211 to first valve outlet port 1212 |
| | | second valve inlet port 1221 to exhaust port 2231 |
| S3 | ON | first valve outlet port 1212 to exhaust port 2231 |
| | | second valve inlet port 1221 to second valve outlet port 1222 |
| S4 | OFF | first valve outlet port 1212 to exhaust port 2231 |
| | | second valve inlet port 1221 to exhaust port 2231 |
| S5 | OFF | first valve inlet port 1211 to first valve outlet port 1212 |
| | | second valve inlet port 1221 to second valve outlet port 1222 |
| S6 | OFF | first valve inlet port 1211 to first valve outlet port 1212 |
| | | second valve inlet port 1221 to exhaust port 2231 |
| S7 | OFF | first valve outlet port 1212 to exhaust port 2231 |
| | | second valve inlet port 1221 to second valve outlet port 1222 |

In particular, states S1 and S5 can be obtained with the leftmost state of the illustrated pump 3210. States S2 and S6 can be obtained with second state from the left, while states S3 and S7 can be obtained with third state from the left. State S4 can be obtained with rightmost state of the illustrated pump 3210.

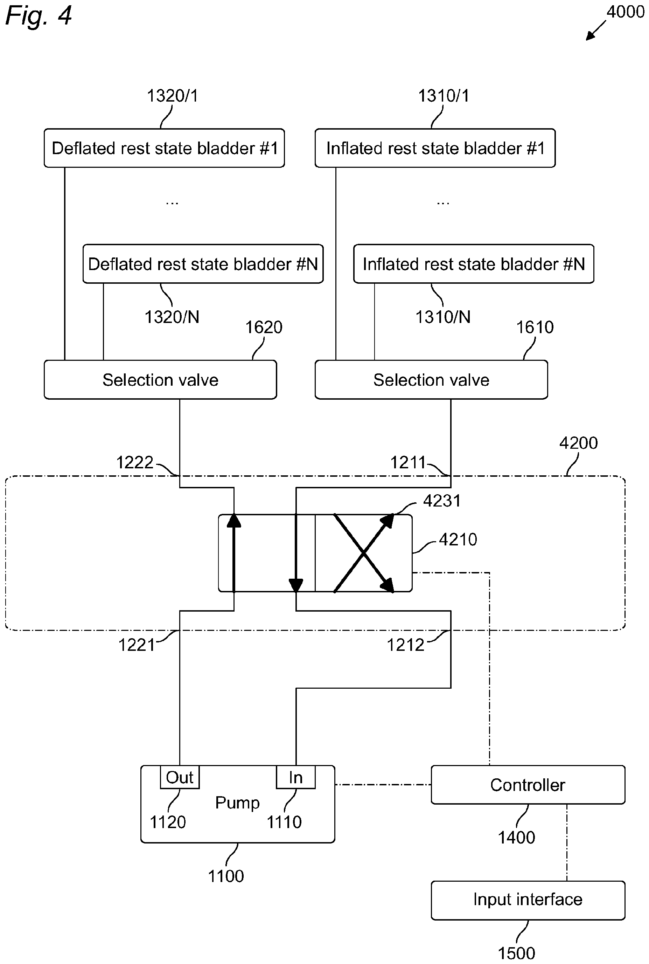

As previously described, not all of those states need to be implemented. Figure 4 is, for instance, a further possible implementation in which only some of the states are implemented. Figure 4 schematically illustrates a bladder system 4000 comprising a possible implementation for the valve system 1200 in the form of valve system 4200.

The valve system 4200 employs a 2/2 valve 4210, which, together with the pump operation, can implement the following states:

| State | Pump 1100 | 2/2 valve 4210 configured to connect |
|---|---|---|
| S1 | ON | first valve inlet port 1211 to first valve outlet port 1212 |
| | | second valve inlet port 1221 to second valve outlet port 1222 |
| S8 | ON | first valve outlet port 1212 to second valve outlet port 1222 |
| | | second valve inlet port 1221 to exhaust port 4231 |

Whit this implementation, it is possible to use state S1, illustrated on the left in the figure, to inflate the one or more second bladders 1320/1 - 1320/N, while deflating the one or more first bladders 1310/1 - 1310/N. It is further possible to use state S8, illustrated to the right on the figure, to deflate the one or more second bladders 1320/1 - 1320/N, while pumping air to the exhaust port 4231. It will be clear to those skilled in the art that the state S8, in which the rightmost connection is connected to the exhaust port 4231 instead of the first valve inlet port 1211 can be obtained through a non-illustrated valve, appropriately configured.

The inflation of the one or more first bladders 1310/1 - 1310/N can be achieved without the pump, thanks to the resilient material, by optionally providing a further non-illustrated valve which connects the port 1211 to the environment.

Following the examples above, it will be clear to those skilled in the art that further alternative embodiments of the invention can be implemented by a valve system 1200 configured to implement any of states S1-S7 defined as

| State | valve system (1200) configured to connect |
|---|---|
| S1 | first valve inlet port 1211 to first valve outlet port 1212 |
| | second valve inlet port 1221 to second valve outlet port 1222 |
| S2 | first valve inlet port 1211 to first valve outlet port 1212 |
| | second valve inlet port 1221 to exhaust port 2231 |
| S3 | first valve outlet port 1212 to exhaust port 2231 |
| | second valve inlet port 1221 to second valve outlet port 1222 |
| S4 | first valve outlet port 1212 to exhaust port 2231 |
| | second valve inlet port 1221 to exhaust port 2231 |
| S5 | first valve inlet port 1211 to first valve outlet port 1212 |

| | |
|---|---|
| | second valve inlet port 1221 to second valve outlet port 1222 |
| S6 | first valve inlet port 1211 to first valve outlet port 1212 |
| | second valve inlet port 1221 to exhaust port 2231 |
| S7 | first valve outlet port 1212 to exhaust port 2231 |
| | second valve inlet port 1221 to second valve outlet port 1222 |

In preferred embodiments, the valve system 1200 can be configured to implement at least one, preferably at least two, more preferably at least three, further more preferably at least four, further more preferably at least five, further more preferably at least six, even more preferably at least seven of states S1-S7.

In specifically preferred embodiments, states S2, S3, S6, S7 and S4 can be implemented so that, for instance, the valve 3210 could be implemented with only the three rightmost states, resulting in a 5/3 valve, or its equivalent.

It has thus been described how a single pump can be used to control and operate two different types of bladders, which would otherwise need the presence of two pumps, by implementing the single pump with two valves instead. This allows the system 2000 to effectively control both bladders, as well as enabling operation modes, such as state S5, which would otherwise not be possible with two pumps.

### List of reference numerals

- 1100:: pump
- 1110:: pump inlet port
- 1120:: pump outlet port
- 1211, 1221:: valve inlet port
- 1212, 1222:: valve outlet port
- 1231:: valve exhaust port
- 1310/1 - 1310/N, 1320/1 - 1320/N:: bladder
- 1400:: controller
- 1500:: input interface
- 1610, 1620:: selection valve

- 2000:: bladder system
- 2200:: valve system
- 2210, 2220:: 3/2 valve
- 2231, 2232:: valve exhaust port

- 3000:: bladder system
- 3200:: valve system
- 3210:: 5/4 valve
- 3231:: valve exhaust port

- 4000:: bladder system
- 4200:: valve system
- 4210:: 2/2 valve
- 4231:: valve exhaust port

## Claims

1. A bladder system (1000, 2000, 3000, 4000) comprising
a pump (1100) comprising a pump inlet port (1110) and a pump outlet port (1120), and
a valve system (1200, 2200, 3200, 4200) configured such that the pump (1100) can be used to
- deflate one or more first bladder (1310/1 - 1310/N), each one being configured such that, when in fluid communication with the environment, the one or more first bladder (1310/1 - 1310/N) has an inflated rest state.
- inflate one or more second bladder (1320/1 - 1320/N), each one being configured such that, when in fluid communication with the environment, the one or more second bladder (1310/1 - 1310/N) has a deflated rest state.

2. The bladder system (1000, 2000, 3000, 4000) according to claim 1,
wherein the valve system (1200, 2200, 3200, 4200) comprises a first valve inlet port (1211), a first valve outlet port (1212), a second valve inlet port (1221), a second valve outlet port (1222), and
wherein the pump inlet port (1110) is connected to the first valve outlet port (1212) and the pump outlet port (1120) is connected to the second valve inlet port (1221).

3. The bladder system (1000, 2000, 3000, 4000) according to claim 1 or 2,
wherein the valve system (1200, 2200, 3200, 4200) further comprises a valve exhaust port (1231).

4. The bladder system (1000, 2000, 3000, 4000) according to any previous claim,
further comprising one or more first bladder (1310/1 - 1310/N), connected to the first valve inlet port (1211).

5. The bladder system (1000, 2000, 3000, 4000) according to claim 4, wherein
the one or more first bladder (1310/1 - 1310/N) is configured such that, when in fluid communication with the environment, the one or more first bladder (1310/1 - 1310/N) has an inflated rest state.

6. The bladder system (1000, 2000, 3000, 4000) according to claim 4 or 5, wherein
the one or more first bladder (1310/1 - 1310/N) comprises resilient material inside the bladder

7. The bladder system (1000, 2000, 3000, 4000) according to claim 6, wherein
the resilient material is foam.

8. The bladder system (1000, 2000, 3000, 4000) according to any of claims 1 to 7,
further comprising one or more second bladder (1320/1 - 1320/N), connected to the second valve outlet port (1222).

9. The bladder system (1000, 2000, 3000, 4000) according to claim 8, wherein
the one or more second bladder (1320/1 - 1320/N) is configured such that, when in fluid communication with the environment, the one or more second bladder (1310/1 - 1310/N) has a deflated rest state.

10. A bladder system (2000) according to any previous claim wherein the valve system (2200) comprises
a first 3/2 valve (2210) comprising a first valve inlet port (1211), a first valve outlet port (1212) and a first valve exhaust port (2231),
a second 3/2 valve (2220) comprising a second valve inlet port (1221), a second valve outlet port (1222) and a second valve exhaust port (2232),
a pump (1100) comprising a pump inlet port (1110) and a pump outlet port (1120), wherein the pump inlet port (1110) is connected to the first valve outlet port (1212) and the pump outlet port (1120) is connected to the second valve inlet port (1221).

11. The bladder system (2000) according to claim 10,
wherein the first 3/2 valve (2210) and/or the second 3/2 valve (2220) is bi-stable.

12. The bladder system (2000) according to claim 10 or 11, further comprising a controller (1400) configured to control the valve system (1200, 2200), and the pump (1100),
to execute any of a plurality of states S1-S4 defined as
| State | Pump (1100) | first 3/2 valve (2210) configured to connect | second 3/2 valve (2210) configured to connect |
|---|---|---|---|
| S1 | ON | first valve inlet port (1211) | second valve inlet port (1221) |
| | | | second valve outlet port (1222) |
| S2 | | first valve outlet port (1212) | second valve inlet port (1221) |
| | | | second valve exhaust port (2232) |
| S3 | | first valve outlet port (1212) | second valve inlet port (1221) |
| | | | second valve outlet port (1222) |
| | | first valve exhaust port (2231) | second valve inlet port (1221) |
| S4 | OFF | | second valve exhaust port (2232) |

13. The bladder system (2000) according to claim 12, further comprising
an input interface (1500) configured to provide the controller (1400) with commands for selecting any of the plurality of states S1-S4 based on a requested operation for the one or more first bladder (1310/1 - 1310/N) and a requested operation for the one or more second bladder (1320/1 - 1320/N),
| requested operation for first bladder (1310/1 - 1310/N) | requested operation for second bladder (1320/1 - 1320/N) | State |
|---|---|---|
| Deflate | Inflate | S1 |
| | Maintain | S2 |
| Maintain | Inflate | S3 |
| | Maintain | S4 |

14. The bladder system (2000) according to claim 12 or 13, wherein the controller (1400) is further configured to control the valve system (1200, 2200) and the pump (1100), to execute any of a plurality of states S5-S7 defined as
| | | | |
|---|---|---|---|
| S5 | OFF | first valve inlet port (1211) | second valve inlet port (1221) |
| | | first valve outlet port (1212) | second valve outlet port (1222) |
| S6 | | | second valve inlet port (1221) |
| | | | second valve exhaust port (2232) |
| S7 | | first valve outlet port (1212) | second valve inlet port (1221) |
| | | first valve exhaust port (2231) | second valve outlet port (1222) |

15. The bladder system (2000) according to claim 14, wherein
the input interface (1500) is further configured to provide the controller (1400) with commands for selecting any of the plurality of states S5-S7 based on a requested operation for the one or more first bladder (1310/1 - 1310/N) and a requested operation for the one or more second bladder (1320/1 - 1320/N),
| | | |
|---|---|---|
| Equalize to second bladder (1320/1 - 1320/N) | Equalize to first bladder (1310/1 - 1310/N) | S5 |
| Deflate if net positive pressure applied to it/Inflate to rest state if net negative pressure applied to it | Maintain | S6 |
| Maintain | Deflate | S7 |

16. A bladder system (3000) according to any of claims 1-9
wherein the valve system (3200) comprises a 5/4 valve (3210)
wherein the bladder system (3000) further comprises a controller (1400) configured to control the valve system (3200), and the pump (1100), to execute any of a plurality of states S1-S7 defined as
| State | Pump 1100 | 5/4 valve (3210) configured to connect |
|---|---|---|
| S1 | ON | first valve inlet port 1211 to first valve outlet port 1212 |
| | | second valve inlet port 1221 to second valve outlet port 1222 |
| S2 | ON | first valve inlet port 1211 to first valve outlet port 1212 |
| | | second valve inlet port 1221 to exhaust port 2231 |
| S3 | ON | first valve outlet port 1212 to exhaust port 2231 |
| | | second valve inlet port 1221 to second valve outlet port 1222 |
| S4 | OFF | first valve outlet port 1212 to exhaust port 2231 |
| | | second valve inlet port 1221 to exhaust port 2231 |
| S5 | OFF | first valve inlet port 1211 to first valve outlet port 1212 |
| | | second valve inlet port 1221 to second valve outlet port 1222 |
| S6 | OFF | first valve inlet port 1211 to first valve outlet port 1212 |
| | | second valve inlet port 1221 to exhaust port 2231 |
| S7 | OFF | first valve outlet port 1212 to exhaust port 2231 |
| | | second valve inlet port 1221 to second valve outlet port 1222 |

17. A bladder system (1000, 2000, 3000) according to any previous claim
wherein the valve system (1200) can be executed to implement any of states S1-S7 defined as
| State | valve system (1200) configured to connect |
|---|---|
| S1 | first valve inlet port 1211 to first valve outlet port 1212 |
| | second valve inlet port 1221 to second valve outlet port 1222 |
| S2 | first valve inlet port 1211 to first valve outlet port 1212 |
| | second valve inlet port 1221 to exhaust port 2231 |
| S3 | first valve outlet port 1212 to exhaust port 2231 |
| | second valve inlet port 1221 to second valve outlet port 1222 |
| S4 | first valve outlet port 1212 to exhaust port 2231 |
| | second valve inlet port 1221 to exhaust port 2231 |
| S5 | first valve inlet port 1211 to first valve outlet port 1212 |
| | second valve inlet port 1221 to second valve outlet port 1222 |
| S6 | first valve inlet port 1211 to first valve outlet port 1212 |
| | second valve inlet port 1221 to exhaust port 2231 |
| S7 | first valve outlet port 1212 to exhaust port 2231 |
| | second valve inlet port 1221 to second valve outlet port 1222 |
